(19) Europäisches Patentamt
European Patent Office
Office européen des brevets

(11) Veröffentlichungsnummer: **0 277 552 B1**

(12) **EUROPÄISCHE PATENTSCHRIFT**

(45) Veröffentlichungstag der Patentschrift: **06.11.91**

(51) Int. Cl.⁵: **B05C 21/00**, B05D 3/14, B05D 1/32

(21) Anmeldenummer: **88100850.2**

(22) Anmeldetag: **21.01.88**

(54) **Bei der Durchführung von Lackierarbieten auf ein Kfz oder einen Teil davon aufbringbares bahn-oder haubenfoermiges Abdeckmittel.**

(30) Priorität: **02.02.87 DE 3702982**

(43) Veröffentlichungstag der Anmeldung:
**10.08.88 Patentblatt 88/32**

(45) Bekanntmachung des Hinweises auf die
Patenterteilung:
**06.11.91 Patentblatt 91/45**

(84) Benannte Vertragsstaaten:
**AT BE CH DE ES FR GB GR IT LI NL SE**

(56) Entgegenhaltungen:
**DE-A- 2 643 845**
**DE-A- 2 753 711**

(73) Patentinhaber: **Horn, Stephanie, geb. Paul**
**Friedrich-Ebert-Strasse 105**
**W-3578 Schwalmstadt(DE)**

(72) Erfinder: **Horn, Stephanie, geb. Paul**
**Friedrich-Ebert-Strasse 105**
**W-3578 Schwalmstadt(DE)**

(74) Vertreter: **Patentanwälte Dipl.-Ing. Rudolf Bi-**
**brach Dipl.-Ing. Elmar Rehberg**
**Postfach 1453 Pütterweg 6**
**W-3400 Göttingen(DE)**

## Beschreibung

Die Erfindung betrifft die Verwendung einer Kunststoffolie bei der Durchführung von Lackierarbeiten an Kraftfahrzeugen oder Teilen davon, eine Kunststoffolie für diese Verwendung sowie ein Verfahren zur Herstellung einer Kunststoffolie für diese Verwendung.

Bei Lackierarbeiten im Kfz-Bereich, insbesondere bei solchen, bei denen die zu verarbeitende Lackfarbe aufgespritzt wird, sind Abdeckbahnen erforderlich, damit die nicht zu lackierenden Flächen vom Farbnebel nicht getroffen werden. Üblicherweise wird als Abdeckmittel Papier verwendet, welches saugfähig ist und die überschüssige Farbe aufnehmen kann. Nachteilig ist jedoch, daß das zu verwendende Papier eine bestimmte Stärke und eine bestimmte Qualität aufweisen muß, um für diesen Verwendungszweck geeignet zu sein. Ist das Papier zu dünn bzw. zu leicht, so kann es vorkommen, daß die aufgespritzte Farbe durchschlägt und auf die zu schützende Oberfläche gelangt. Die Kosten für Abdeckmittel aus Papier sind daher relativ hoch. Dies gilt insbesondere in der Kraftfahrzeugindustrie, wo große Mengen solcher Papierabdeckmittel gebraucht werden.

Ein weiterer Nachteil solcher Abdeckmittel aus Papier besteht darin, daß das mit der Lackfarbe vollgesaugte Papier nicht wieder für die Papierherstellung wiederverwendet werden kann, was durch die chemischen Bestandteile der Lackfarbe verursacht ist. Die bekannte Umweltfreundlichkeit des Papiers kommt für die mit Lack verseuchten Abfälle nicht zum Tragen. Das Abfallpapier muß daher auf speziellen Müllkippen deponiert oder verbrannt werden.

Die DE-C-16 46 100 betrifft eine Abdeckhülle für Kraftfahrzeuge zum Abdecken von nicht zu lackierenden Fahrzeugteilen während des Lackspritzvorgangs. Die Abdeckhülle besteht im wesentlichen aus einem schweren Baumwollgewebe, welches einzelne nach oben umschlagbare Bahnen aufweist. Das Baumwollgewebe ist mit Aluminium enthaltenem Silikon beschichtet. Solche Abdeckhüllen sind relativ schwer und demzufolge auch schlecht zu handhaben. Auch dort, wo es die nach oben umschlagbaren Bahnen erlauben, kann die Abdeckhülle grundsätzlich nur mit einer Papierabdeckung im unmittelbaren Spritzbereich eingesetzt werden. Dort, wo es die Unterteilung in die nach oben umklappbaren Bahnen mit der zu lackierenden Stelle nicht korrespondiert, ist es natürlich auch erforderlich, zusätzlich Papierstreifen einzusetzen, also dennoch eine altbekannte Technik hier grundsätzlich anzuwenden. Durch die erforderliche Beschichtung des Baumwollgewebes ist die Abdeckhaube relativ dick und steif, so daß sie sich nur schlecht zusammenfalten läßt. Dies verstärkt sich bei mehrfachem Gebrauch der Hülle durch die im zunehmenden Maß anheftenden Lackreste. Die Hülle wird dann immer steifer und unbeweglicher und erfordert auch im unbenutzten Zustand relativ viel Platz, der in den meisten Werkstätten gar nicht zur Verfügung steht. Bei der Anwendung der Abdeckhaube während der Spritzlackierung soll die Silikon-Beschichtung das Anhaften der Farbe auf der Haube verhindern. Diese beabsichtigte Wirkung tritt jedoch nur sehr unvollkommen ein; insbesondere ist das der Fall bei mehrfachem Gebrauch, der vom Preis der Haube wirtschaftlich unerläßlich ist; dabei letztendlich sich mehrfache Farbschichten auf der Haube aufbauen und die Haube dadurch noch steifer und unhandlicher wird. Die bekannten Abdeckhüllen sind auch vergleichsweise teuer in der Herstellung, was durch den aufwendigen Gewebeaufbau, die Bahneneinteilung und die besondere Beschichtung zurückzuführen ist. Solche Abdeckhauben konnten sich daher in der Praxis nicht durchsetzen.

Weiterhin sind sogenannte Staubschutzhauben aus Kunststoffolie bekannt, die in Lackierereien zum Abdecken abgestellter, nicht der Lackierarbeit unterworfener Fahrzeuge benutzt werden. Das Abdecken ist hier jedoch deshalb erforderlich, um die Fahrzeuge vor in der Luft schwebenden Lackresten, die beim Lackieren an einem anderen Fahrzeug entstehen, zu schützen, damit sie sich nicht auf der Fahrzeugoberfläche der benachbarten Fahrzeuge niederschlagen. Als Abdeckmittel bei Lackierarbeiten eignen sie sich nicht, da etwa aufgespritzte Lackfarbe sehr schnell an der Kunststoffolie antrocknet und beim Entfernen der Kunststoffolie von der Folie abblättert und auf die benachbarte frisch lackiertem, feuchte Lackstelle fällt, so daß diese unbrauchbar wird und eine Nachbehandlung erforderlich ist.

Außerdem ist es bekannt, Abdeckfolien aus Kunststoff beim Lackieren über die Autoräder zu stülpen, um sie beim Lackieren der Karosserie zu schützen. Auch hier tritt das Problem auf, daß die Farbe auf der Kunststoffolie beim Entfernen der Folie abblättert und auf die frisch lackierten Stellen fällt. Die Lackstelle muß in solchen Fällen wieder abgeschliffen und von Grund auf neu vorbehandelt und lackiert werden.

Aus der DE-A-26 43 845 ist ein Verfahren zum Abdecken von während des Lackspritzvorgangs nicht zu lackierenden Teilen von Kraftfahrzeugen bekannt, bei dem eine Kunststoffolie, z. B. aus Polyäthylen, als Abdeckmittel in Verbindung mit einem entfernbaren Klebestreifen eingesetzt wird. Es werden die nicht zu lackierenden Teile des Kraftfahrzeugs randseitig mit einem Klebestreifen versehen. Auf den gesamten, dem Spritzlack ausgesetzten Bereich wird ein Abdeckmittel in Form einer Hülle aufgelegt. Schließlich erfolgt das Einreißen oder Abschneiden von Teilen des Abdeckmittels entlang des Klebestreifens. Damit werden die zu lackierenden Flächen wieder freigelegt. Besondere Hinweise einer Vorbehandlung oder Ausrüstung der Kunststoffolie in dem Sinn, daß Lackreste auf der Kunststoffolie haften oder nicht haften sollen, werden nicht mitgeteilt.

Aus der DE-A-27 53 711 ist eine Vorrichtung zur Koronabehandlung von Werkstoffen, wie beispielsweise Kunststoffolien, bekannt, um die Adhäsion an der Oberfläche von Kunststoffolien zu verbessern bzw. zu beeinflussen. Dabei wird die zu behandelnde Folie zwischen einer als Elektrode ausgebildeten Walze und einer Messerelektrode hindurchgeführt. Durch Anlegen einer wechselnden Hochspannung höherer Frequenz entsteht zwischen den beiden Elektroden im Elektrodenspalt eine Koronaentladung, die die Oberfläche der zu behandelnden Folie im gewünschten Sinn beeinflußt. Es wird keinerlei Hinweis gegeben, in welchem Zusammenhang derart vorbehandelte Kunststoffolien eingesetzt werden sollen. Auch fehlen Ausführungen darüber, wielange die Wirkung einer solchen Koronabehandlung anhält und mit welcher Intensität sie durchgeführt werden muß, um überhaupt ein Ergebnis zu erzielen.

Es ist aber bekannt, Kunststoffolie zu bedrucken. Hierbei wird die Kunststoffolie mit dem sogenannten Koronaverfahren vorbehandelt, damit die aufzutragende Druckfarbe auf der Kunststoffolie haften bleibt. Bei diesem Verfahren wird die Kunststoffolie durch ein elektrisches Feld geführt, wobei gleichzeitig Koronaentladungen stattfinden, was zu einer Oberflächenveränderung der Kunststoffolie führt. Die Ursachen dieser Oberflächenbehandlung sind bisher nicht genau geklärt. Vermutlich werden im Oberflächenbereich der Kunststoffolie Moleküle aufgebrochen, die dann mit der Druckfarbe eine feste Verbindung eingehen können. Es entsteht bei der Koronaentladung auch Ozon, welches sich möglicherweise mit den Molekülen an der Oberfläche der Kunststoffolie verbindet, wodurch die Oberflächenspannung herabgesetzt wird. Darüberhinaus kann durch die bei der Koronaentladung entstehende Wärme die Oberfläche durch sogenannte Mikroporen aufgerauht werden, so daß die Druckfarbe einen guten Haftgrund findet.

Der Druckvorgang erfolgt jedoch dabei unmittelbar im Anschluß an die Koronabehandlung, wobei die Druckfarbe in einer hauchdünnen, kaum meßbaren Schicht aufgetragen wird. Insoweit stellt sich das Problem einer Langzeitwirkung der Koronabehandlung nicht. Die Koronabehandlung muß vielmehr nur mit der Intensität durchgeführt werden, daß die unmittelbar anschließend aufgedruckte Farbe haftet.

Der Erfindung liegt die Aufgabe zugrunde, ein Abdeckmittel der eingangs beschriebenen Art so weiterzubilden, daß die unvermeidlich auf das Abdeckmittel aufgespritzten Lackschichten beim Entfernen des Abdeckmittels nicht abblättern, sondern verläßlich haften bleiben. Weiterhin soll das Abdeckmittel kostengünstig in der Herstellung, einfach und sicher in der Handhabung und auch umweltfreundlich sein.

Dies wird erfindungsgemß durch die Verwendung einer Kunststoffolie erreicht, bei der mindestens eine Oberfläche nach dem Koronaverfahren behandelt ist und die als bahn- oder haubenförmiges Abdeckmittel benutzt wird, welches bei der Durchführung von Lackierarbeiten auf ein Kraftfahrzeug oder ein Teil davon aufzubringen ist. Durch diese Vorbehandlung ist es möglich, daß selbst Lackfarbe auf der Kunststoffolie haftet, ohne daß es zum Abblättern der getrockneten Farbe kommt. Von besonderer Wichtigkeit ist dabei, daß die aufgespritzte Lackfarbe, auch wenn sie Schichten von erheblicher Stärke auf der Kunststoffolie bildet, auch dann auf der Kunststoffolie haftet und haften bleibt, wenn diese vom Kfz aufgenommen und dabei beansprucht, inbesondere geknittert, wird. Dies wurde bisher nicht für möglich gehalten, da Kunststoffolien bekanntlich eine wachsartige Oberfläche aufweisen, auf welcher Lackschichten nicht haften, sondern selbst bei geringfügiger Beanspruchung abblättern. Überraschenderweise ist die durch die Koronabehandlung bewirkte Abhäsion nicht nur auf solche Zeiträume von Stunden oder allenfalls Tagen begrenzt, wie sie beim Bedrucken von Kunststoffolie auftreten. Es ergibt sich vielmehr eine ausgesprochene Langzeitwirkung, so daß den Bedingungen der Verwendung der vorbehandelten Kunststoffolie in Autowerkstätten Rechnung getragen ist, bei denen zwischen der Ausrüstung und der Verwendung der Folie bei Lackierarbeiten nicht selten Zeiträume zwischen mehreren Monaten bis etwa zu einem Jahr auftreten können.

Die Folien haben im Vergleich zum Papier ein außerordentlich geringes Flächengewicht, so daß die Abfallmenge erheblich geringer ist. Die Entsorgung ist daher erheblich einfacher als bei Papier, wobei sich die Kunststoffolie auch verbrennen läßt und dabei lediglich auf Rückstände aus der Lackfarbe zu achten ist. Der Heizwert der Kunststoffolie ist relativ hoch, so daß sich eine Verbrennung in Heizungsanlagen anbietet. Feste Rückstände, wie etwa bei Papier, treten in dem Maße nicht auf, und die aus der Kunststoffolie entstehenden Abgase sind im Falle von Polyäthylen ungefährlich. Lediglich die Abgase der Lackfarbe sind zu berücksichtigen.

Die Kunststoffolie, die für die Verwendung bei den Lackierarbeiten eingesetzt wird, kennzeichnet sich erfindungsgemäß dadurch, daß die Intensität der Vorbehandlung bei der Herstellung so hoch gewählt ist, daß an der Folienoberfläche eine Oberflächen- bzw. Benetzungsspannung von mindestens 45 dyn/cm erreicht ist. Bei dieser Benetzungsspannung ist sichergestellt, daß die Lackfarbe in gewünschter Weise an der Kunststoffolie haften bleibt. Intensität der Vorbehandlung läßt sich dabei einmal durch die elektrische Leistung pro Flächeneinheit (W/cm²) bei der Korona- Vorbehandlung sowie die Durchlaufgeschwindigkeit der Kunststoffolie bei der Behandlung so hoch wählen, daß die Oberflächen- und Benetzungsspannung mindestens 45 dyn/cm erreicht. Durch die Wahl dieser Parameter läßt sich die Vorbehandlung in einfacher Weise an die besonderen Eigenschaften der Art der Kunststoffolie anpassen. Auch durch die gezielte Zusammensetzung des Kunststoffmaterials der Kunststoffolie ist es möglich, sicherzustellen, daß die angegebene Grenze der Oberflächen- und Benetzungsspannung mit Sicherheit erreicht wird. Die maximal erreichbare Oberflächen- bzw. Benetzungsspannung ist materialabhängig und läßt sich auch bei stärkster Vorbehandlung nicht beliebig steigern. Um ausreichende Werte erreichen zu können, kann es erforderlich sein, den Anteil eines Gleitmittels möglichst gering zu halten oder auf den Einsatz von Gleitmitteln völlig zu verzichten. Die Intensität der Vorbehandlung und der geringe Anteil an Gleitmittel unterstützen sich gegenseitig. Gleitmittel dienen bekanntlich dazu, die Folienoberfläche so auszubilden, daß sich die extrudierten Folienschläuche nach der Herstellung öffnen lassen. Sie sind daher verantwortlich für die wachsartige, abstoßende Oberfläche, welche andererseits die Haftung für die aufgespritzte Lackfarbe beeinträchtigt. Andere Additive, wie z.B. Antistatika, haben auf die Haftfähigkeit der Lackfarbe nur geringen Einfluß. Um die Haftfähigkeit der Lackfarbe weiter zu erhöhen, kann dem Kunststoffmaterial auch Kreide zugesetzt sein. Kreide sorgt für eine relativ rauhe Oberfläche, was der Haftfähigkeit zugute kommt.

Die Kunststoffolie kann aus Polyäthylen bestehen, aus aus welchem sich kostengünstige Folien herstellen und die sich auch einfach weiterverarbeiten lassen.

Die Polyäthylenfolie kann eine Kombination verschiedener Polyäthylene und Additive enthalten und sich etwa in den angegebenen Verhältnissen zusammensetzen:

1. mind. 45 Gew. % linearem Polyäthylen (LLDPE)

2. 10 - 50 Gew. % Hochdruckpolyäthylen (LDPE)

3. 0,5 - 10 Gew. % Niederdruckpolyäthylen (HDPE)

4. 0,1 - 5 Gew. % Oleamide oder Erucamide und natürliche Silika und

5. bis etwa 5 Gew. % Fettsäureester, Farbstoffe, synthetische Kieselsäure, Stabilisatoren und Verarbeitungshilfsmittel, wobei die Summe jeweils 100 Gew. % beträgt.

Aus der Kunststoffolie lassen sich neben Hauben auch vorgefertigte Formteile, z.B. zur Abdeckung des Kofferraums oder der Motorhaube von Kraftfahrzeugen herstellen. Solche Formteile sind auf den jeweiligen Anwendungszweck zugeschnitten, so daß sie sich in einfachster Weise anbringen lassen, ohne daß unnötige Arbeitsgänge, wie das Zuschneiden einzelner Folienstücke, notwendig sind.

Eine so zusammengesetzte Kunststoffolie läßt sich sehr dünn ausblasen und hat trotz geringster Stärke gute mechanische Eigenschaften, wie z.B. eine hohe Dehnbarkeit und eine hohe Reißfestigkeit. Gleichzeitig kann durch die Vorbehandlung die Oberfläche zu einem guten Haftgrund für die Lackfarbe vorbereitet werden.

Wenn die Intensität der Vorbehandlung so hoch gewählt ist, daß ein Nachlassen der Oberflächeneigenschaften der Kunststoffolie berücksichtigt ist, ergibt sich eine für die Lackierarbeiten brauchbare Kunststoffolie, bei der sich die Zeitdauer zwischen Vorbehandlung und Verwendung nicht negativ auswirkt. Bei den bekannten Druckverfahren erfolgt die Bedruckung bekanntlich unmittelbar nach der Vorbereitung. Die Wirkung der Vorbehandlung läßt jedoch, wie sich gezeigt hat, nach, was bisher unbekannt war. Da die Lackierarbeiten jedoch nicht unmittelbar im Anschluß an die Folienherstellung erfolgen, sondern Wochen und Monate später, ist es erforderlich, die Vorbehandlung soweit zu treiben, daß auch nach relativ langer Zeit ein ausreichender Haftgrund für die Lackfarbe vorhanden ist. Dabei kann die Intensität der Vorbehandlung so hoch gewählt sein, daß ein Nachlassen der Oberflächeneigenschaften der behandelten Kunststoffolie berücksichtigt ist und nach einem Zeitraum von etwa 6 Monaten nach der Behandlung eine Oberflächen- bzw. Benetzungsspannung von mind. 45 dyn/cm an der Folienoberfläche auftritt. Es hat sich gezeigt, daß sich die Oberflächeneigenschaften der Kunststoffolie nach etwa 6 Monaten nicht nennenswert weiter verändern und quasi ein stabiler Zustand eintritt. Die Kunststoffolie wird daher auch bei großem zeitlichen Abstand zwischen Vorbehandlung und Verwendung nicht unbrauchbar, was die Lagerhaltung erheblich vereinfacht und was auch zu Kosteneinsparungen führt.

Die Kunststoffolie kann auch aus einem Verbundmaterial hergestellt sein. Sie besteht dann aus mehreren Schichten unterschiedlichen Materials, welches der jeweiligen Aufgabe entsprechend ausgewählt ist. Beispielsweise kann die auf dem Fahrzeug aufliegende Seite aus einem stumpfen bis klebrigen Material bestehen, so daß ein Verrutschen der Kunststoffolie auf dem Fahrzeug ausgeschlossen ist. Die andere Seite der Kunststoffolie kann dabei aus einem Material gebildet sein, welches gute Hafteigenschaften aufweist bzw. durch die Vorbehandlung kommt.

Die Kunststoffolie kann auch auf beiden Seiten vorbehandelt sein. Die vorbehandelte Oberfläche einer Kunststoffolie ist mit bloßem Auge nicht erkennbar und durch eine beidseitige Vorbehandlung ist sichergestellt, daß bei Lackierarbeiten immer eine haftfähige Oberfläche vorhanden ist.

Ein Verfahren zur Herstellung einer Kunststoffolie für die beschriebene Verwendung kennzeichnet sich dadurch, daß die Kunststoffolie am Abschluß ihrer Herstellung eine Korona-Vorbehandlungseinrichtung durchläuft, wobei mindestens eine ihrer Oberfläche vorbehandelt wird. Kunststoffolien lassen sich einfach und kostengünstig herstellen, wobei ohne Unterbrechung sehr lange Bahnen herstellbar sind. Diese Bahnen können nun durch die Korona-Vorbehandlungseinrichtung hindurchgeführt werden. Die Vorbehandlung kann dadurch kontinuierlich erfolgen und somit kostengünstig und in einfacher Weise durchgeführt werden.

Bei diesem Verfahren kann die Intensität der Vorbehandlung bei der Herstellung so hoch gewählt werden, daß an der Folienoberfläche eine Oberflächen- bzw. Benetzungsspannung von mind. 45 dyn/cm erreicht wird. Bei dieser Benetzungsspannung ist die Haftfähigkeit der Lackfarbe gewährleistet. Zu berücksichtungen ist hierbei, daß die Lackfarbe in relativ dicken Schichten auf der Folie aufliegt, wohingegen bei bekannten Druckverfahren nur ein hauchdünner, unmeßbarer Farbauftrag erfolgt.

Die elektrische Leistung pro Flächeneinheit (W/cm2) bei der Korona-Vorbehandlung sowie die Durchlaufgeschwindigleit der Kunststoffolie kann bei der Behandlung so hoch gewählt werden, daß eine Oberflächen- bzw. Benetzungsspannung von mind. 45 dyn/cm erreicht wird. Die Intensität der Vorbehandlung läßt sich durch die elektrische Leistung pro Flächeneinheit (W/cm2) und durch die Geschwindigkeit der Folie einstellen, wobei eine hohe Leistung pro Flächeneinheit (W/cm2) bei einer geringen Geschwindigkeit für eine hohe Behandlungsintensität sorgen.

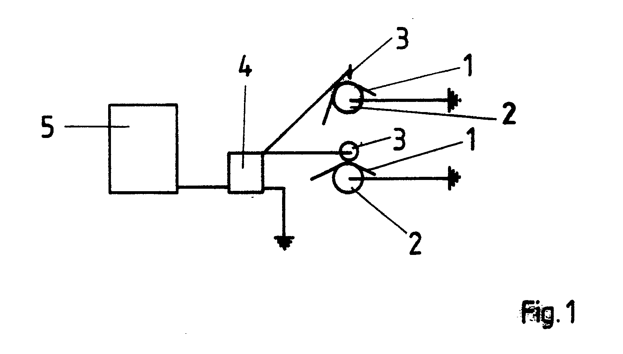

Eine Möglichkeit der Vorbehandlung der Kunststoffolie wird anhand der beiliegenden Zeichnung in der nachfolgenden Beschreibung erläutert. Diese zeigt:

eine schematische Darstellung einer Korona-Vorbehandlungseinrichtung.

Bei der Korona-Vorbehandlungseinrichtung, welche in der Zeichnung schematisch dargestellt ist, läuft eine zu behandelnde Kunststoffolie 1 über eine Walze 2, welche elektrisch leitet und geerdet ist. über der Walze 2 und in einem gewissen Abstand über der Kunststoffolie 1 sind Elektroden 3 angeordnet, welche über einen Hochspannungstransformator 4 an einen Wechselstromgenerator 5 angeschlossen sind.

Durch Anlegen einer bestimmten Leistung pro Flächeneinheit (W/cm2) bei einer bestimmten Frequenz entsteht dadurch zwischen der Kunststoffolie 1 und den Elektroden 3 eine sog. Korona-Entladung. Durch diese Entladung wird die Oberfläche der Kunststoffolie verändert, so daß sie später mit der aufgespritzten Lackfarbe eine feste Verbindung eingehen kann. Die Oberfläche wird dabei durch die Entladung aufgerauht, wobei sogenannte Mikroporen entstehen. Zusätzlich kann auch eine chemische Veränderung eintreten, so daß die Kunststoffolie mit der Lackfarbe eine chemische Verbindung eingehen kann. Die Haftung der Lackfarbe auf der Kunststoffolie 1 wird durch die Behandlung erheblich verbessert. Ein späteres Abblättern der angetrockneten Lackfarbe ist mit Sicherheit ausgeschlossen.

Die Intensität der Vorbehandlung wird einerseits durch die Höhe und Frequenz der an den Elektroden 3 anliegenden Leistung pro Flächeneinheit (W/cm2) und andererseits durch die Durchlaufgeschwindigkeit der Kunststoffolie 1 durch die Vorbehandlungseinrichtung bestimmt. Diese Parameter lassen sich in einfacher Weise verändern, so daß eine Anpassung an das Folienmaterial vorgenommen werden kann.

Die Intensität der Vorbehandlung ist vorzugsweise so einzustellen, daß eine Oberflächen- bzw. Benetzungsspannung an der Oberfläche der Kunststoffolie von mindestens 45 dyn/cm erreicht wird. Dieser Wert liegt höher, als es bei bekannten Verfahren zum Bedrucken von Kunststoffolien der Fall ist.

Zu berücksichtigen ist, daß die maximal erreichbaren Werte auch von der Art des verwendeten Kunststoffmaterials abhängig sind. Das Kunststoffmaterial der Kunststoffolie ist demgemäß entsprechend einzustellen, daß hohe Oberflächenspannungen erreichbar sind. Hierzu ist der Anteil des üblicherweise zugesetzten Gleitmittels möglichst gering zu halten. Solche Gleitmittel sorgen dafür, daß die extrudierten Folienschläuche nach der Herstellung geöffnet und die aufeinander aufliegenden Folienbahnen voneinander getrennt werden können. Sie ergeben die wachsartige Oberfläche, welche dem Auftragen einer Lackfarbe hinderlich ist. Die übrigen Zuschlagstoffe sind in diesem Zusammenhang weniger bedeutend.

Als Kunststoffmaterial für die Kunststoffolie eignet sich besonders Polyäthylen, welches sich leicht verarbeiten läßt und geringe Kosten verursacht. Bei Versuchen hat sich eine Kombination bewährt, welche aus verschiedenen Polyäthylenen und Oleamiden zusammengesetzt ist. Vorzugsweise wird hierbei eine Mischung von mindestens 45 Gewichtsprozent linearem Polyäthylen (LLDPE) und 10 bis 50 Gewichtsprozent Hochdruckpolyäthylen (LDPE) und 0,5 bis 10 Gewichtsprozent Niederdruckpolyäthylen (HDPE) und 0,1 bis 5 Gewichtsprozent Oleamide oder Erucamide und natürliches Silika und bis etwa 5 Gewichtsprozent Fettsäureester Farbstoffe, synthetischer Kieselsäure, Stabilisatoren und Verarbeitungshilfsmittel verwendet. Eine aus dieser Materialmischung hergestellte Kunststoffolie ist dehnbar und reißfest, läßt sich sehr dünn ausblasen und kann durch die Korona-Vorbehandlung mit einer gut haftenden Oberfläche versehen werden.

Es hat sich gezeigt, daß die Oberflächeneigenschaften der Kunststoffolie nach der Vorbehandlung sich mit der Zeit verändern. Die Oberflächenspannung nimmt dabei ab. Die Intensität der Vorbehandlung ist daher so hoch einzustellen, daß zum Zeitpunkt der Lackierarbeiten noch eine ausreichende Haftfähigkeit vorhanden ist. Versuche haben ergeben, daß die Intensität der Vorbehandlung so einzustellen ist, daß nach Ablauf von 6 Monaten nach der Vorbehandlung noch eine Oberflächenspannung von mindestens 45 dyn/cm vorhanden sein soll. Nach 6 Monaten tritt erfahrungsgemäß keine Änderung mehr ein und der Oberflächenzustand der Kunststoffolie bleibt stabil.

Die Vorbehandlung der Kunststoffolie kann auf beiden Oberflächen vorgenommen werden, wozu eine zweite Vorbehandlungsstation vorzusehen ist. Die behandelte Oberfläche der Kunststoffolie ist mit bloßem Auge nicht erkennbar, so daß bei einer beidseitig behandelten Kunststoffolie sichergestellt ist, daß eine behandelte Oberfläche bei den Lackierarbeiten zu oberst liegt.

Die so behandelte Kunststoffolie läßt sich zu Bahnen oder Hauben verarbeiten, welche zur Abdeckung von Kraftfahrzeugen benutzt werden können. Andererseits können auch Formteile hergestellt werden, mit welchen beispielsweise Türen, Motorhauben o. dgl. abgedeckt werden können, ohne daß diese Teile einzeln zugeschnitten werden müssen.

**Patentansprüche**

1. Verwendung einer Kunststoffolie, bei der mindestens eine Oberfläche nach dem Korona-Verfahren behandelt ist als bahn- oder haubenförmiges Abdeckmittel, welches bei der Durchführung von Lackierarbeiten auf ein Kraftfahrzeug oder einen Teil davon aufzubringen ist.

2. Kunststoffolie für die Verwendung nach Anspruch 1, dadurch gekennzeichnet, daß die Intensität der Vorbehandlung so hoch gewählt ist, daß an der Folienoberfläche eine Oberflächen- bzw. Benetzungsspannung von mindestens 45 dyn/cm erreicht ist.

3. Kunststoffolie für die Verwendung nach Anspruch 1 und 2, dadurch gekennzeichnet, daß die elektrische Leistung pro Flächeneinheit (W/cm2) bei der Korona- Vorbehandlung sowie die Durchlaufgeschwindigkeit der Kunststoffolie bei der Behandlung so hoch gewählt ist, daß eine Oberflächen- bzw. Benetzungsspannung von mindestens 45 dyn/cm erreicht ist.

4. Kunststoffolie für die Verwendung nach Anspruch 1 - 3, dadurch gekennzeichnet, daß die Zusammensetzung des Kunststoffmaterials der Kunststoffolie so gewählt ist, daß eine Oberflächen- bzw. Benetzungsspannung von mindestens 45 dyn/cm nach einer Vorbehandlung mit dem Korona- Verfahren erreichbar ist.

5. Kunststoffolie für die Verwendung nach Anspruch 4, dadurch gekennzeichnet, daß der Anteil eines Gleitmittels im Kunststoffmaterial der Folie minimiert ist.

6. Kunststoffolie für die Verwendung nach Anspruch 4 und 5, dadurch gekennzeichnet, daß dem Kunststoffmaterial der Kunststoffolie Kreide zugesetzt ist.

7. Kunststoffolie für die Verwendung nach Anspruch 1 - 6, dadurch gekennzeichnet, daß die Kunststoffolie aus Polyäthylen besteht.

8. Kunststoffolie für die Verwendung nach Anspruch 1 - 7, dadurch gekennzeichnet, daß das Kunststoffmaterial der Kunststoffolie eine Kombination verschiedener Polyäthylene und Additive enthält und sich in den angepaßten Verhältnissen zusammensetzt aus:
   1. mindestens 45 Gew. % linearem Polyäthylen (LLDPE)
   2. 10 - 15 Gew. % Hochdruckpolyäthylen (LDPE)
   3. 0,5 - 10 Gew. % Niederdruckpolyäthylen (HDPE)
   4. 0,1 - 5 Gew. % Oleamide oder Erucamide und natürliche Silika und
   5. bis etwa 5 Gew. % Fettsäureester, Farbstoffe, synthetische Kieselsäure, Stabilisatoren und Verarbeitungshilfsmittel,
   wobei die Summe des aus 1. - 5. jeweils 100 Gew. % beträgt.

9. Kunststoffolie für die Verwendung nach Anspruch 1 - 8, dadurch gekennzeichnet, daß aus der Kunststoffolie vorgefertigte Formteile, z.B. zur Abdeckung des Kofferraums oder der Motorhaube bei Kraftfahrzeugen gefertigt sind.

10. Kunststoffolie für die Verwendung nach Anspruch 1 - 9, dadurch gekennzeichnet, daß die Intensität so hoch gewählt ist, daß ein Nachlassen der Oberflächeneigenschaften der behandelten Kunststoffolie berücksichtigt ist.

11. Kunststoffolie für die Verwendung nach Anspruch 10, dadurch gekennzeichnet, daß die Intensität der Vorbehandlung so hoch gewählt ist, daß ein Nachlassen der Oberflächeneigenschaften der behandelten Kunststoffolie berücksichtigt ist und nach einem Zeitraum von etwa 6 Monaten nach der Behandlung eine Oberflächen- bzw. Benetzungsspannung von mindestens 45 dyn/cm an der Folienoberfläche auftritt.

12. Kunststoffolie für die Verwendung nach Anspruch 1 - 11, dadurch gekennzeichnet, daß die Kunststoffolie aus einem Verbundmaterial besteht.

13. Kunststoffolie für die Verwendung nach Anspruch 1 - 12, dadurch gekennzeichnet, daß die Kunststoffolie auf beiden Seiten vorbehandelt ist.

14. Verfahren zur Herstellung einer Kunststoffolie für die Verwendung nach Anspruch 1 - 13, dadurch gekennzeichnet, daß die Kunststoffolie am Abschluß ihrer Herstellung eine Korona-Vorbehandlungseinrichtung durchläuft, wobei mindestens eine ihrer Oberflächen vorbehandelt wird.

15. Verfahren nach Anspruch 14, dadurch gekennzeichnet, daß die Intensität der Vorbehandlung bei der Herstellung so hoch gewählt wird, daß an der Folienoberfläche eine Oberflächen- bzw. Benetzungsspannung von mindestens 45 dyn/cm erreicht wird.

16. Verfahren nach Anspruch 14 und 15, dadurch gekennzeichnet, daß die elektrische Leistung pro Flächeneinheit (W/cm2) bei der Korona-Vorbehandlung sowie die Durchlaufgeschwindigkeit der Kunststoffolie bei der Behandlung so hoch gewählt wird, daß eine Oberflächen- bzw. Benetzungsspannung von mindestens 45 dyn/cm erreicht wird.

**Claims**

1. Use of a synthetic material film, in which at least one surface has been treated by the corona process, as strip-shaped or hood-shaped masking means, which is placeable on a motor vehicle or part thereof during the performance of lacquering operations.

2. Synthetic material foil for the use according to claim 1, characterised thereby, that the intensity of the preliminary treatment is chosen to be so high that a surface tension or wetting tension of at least 45 dynes per square centimetre is attained at the film surface.

3. Synthetic material foil for the use according to claim 1 and 2, characterised thereby, that the electrical power per unit area (watts per square centimetre) of the preliminary corona treatment as well as the transit speed of the synthetic material film during the treatment are chosen to be so high that a surface tension or wetting tension of at least 45 dynes per square centimetre is attained.

4. Synthetic material foil for the use according to claim 1 to 3, characterised thereby, that the composition of the synthetic material substance of the synthetic material film is so chosen that a surface tension or wetting tension of at least 45 dynes per square centimetre is attainable after a preliminary treatment by the corona process.

5. Synthetic material foil for the use according to claim 4, characterised thereby, that the proportion of a lubricant in the synthetic material substance of the film is minimised.

6. Synthetic material foil for the use according to claim 4 and 5, characterised thereby, that chalk is added to the synthetic material substance of the synthetic material film.

7. Synthetic material foil for the use according to claim 1 to 6, characterised thereby, that the synthetic material film consists of polyethylene.

8. Synthetic material foil for the use according to claim 1 to 7, characterised thereby, that the synthetic material substance of the synthetic material film contains a combination of different polyethylenes and additives and is composed in about the adapted ratios of:
   1. at least 45% by weight of linear polyethylene (LLDPE),
   2. 10 to 50% by weight of high pressure polyethylene (LDPE),
   3. 0.5 to 10% by weight of low pressure polyethylene (HDPE),
   4. 0.1 to 5% by weight of oleamides or erucamides or natural silica and
   5. up to about 5% by weight of fatty acid esters, dyestuffs, synthetic silica, stabilisers and processing aids,

wherein the sum of that of 1 to 5 each time amounts to 100% by weight.

9. Synthetic material foil for the use according to claim 1 to 8, characterised thereby, that prefrabricated moulded parts, for example for the masking of the boot or of the engine bonnet in the case of motor vehicles, are produced from the synthetic material film.

10. Synthetic material foil for the use according to claim 1 to 9, characterised thereby, that the intensity of the preliminary treatment is chosen to be so high that a relaxation of the surface properties of the treated synthetic material film is taken into consideration.

11. Synthetic material foil for the use according to claim 10, characterised thereby, that the intensity of the preliminary treatment is chosen to be so high that a relaxation of the surface properties of the treated synthetic material film is taken into consideration and a surface tension or wetting tension of at least 45 dynes per square centimetre occurs at the film surface after a time interval of about 6 months after the treatment.

12. Synthetic material foil for the use according to claim 1 to 11, characterised thereby, that the synthetic material film consists of a compound material.

13. Synthetic material foil for the use according to claim 1 to 12, characterised thereby, that the synthetic material film is preliminarily treated on both sides.

14. Method for the production of a synthetic material foil for the use according to claims 1 to 13, characterised thereby, that the synthetic material film passes through a corona preliminary treatment equipment, wherein at least one of its surfaces is preliminarily treated.

15. Method according to claim 14, characterised thereby, that the intensity of the preliminary treatment during the manufacture is chosen to be so high that a surface tension or wetting tension of at least 45 dynes per square centimetre is attained at the film surface.

16. Method according to claim 14 and 15, characterised thereby, that the electrical power unit area (watts per square centimetre) of the preliminary corona treatment as well as the transit speed of the synethic material film during the treatment are chosen to be so high that a surface tension or wetting tension of at least 45 dynes per square centimetre is attained.

## Revendications

1. Utilisation d'un film de matière plastique dont au moins une face a été traitée par effet corona, en tant que moyen de couverture à étendre sous la forme de panneau ou de housse sur un véhicule à moteur ou une de ses parties lors de l'exécution de travaux de peinture.

2. Film de matière plastique à utiliser selon la revendication 1, caractérisé en ce que l'intensité du traitement préalable est choisie d'une force telle qu'on obtient sur la surface du film une tension superficielle ou une tension de mouillage d'au moins 45 dynes/cm (soit 45 x $10^{-3}$ newton/m).

3. Film de matière plastique à utiliser selon les revendications 1 et 2, caractérisé en ce que la puissance électrique par unité de surface $(W/cm^2)$ lors du traitement préalable par effet corona ainsi que la vitesse de défilement du film plastique au cours du traitement est choisie d'une valeur telle qu'on obtient une tension superficielle ou une tension de mouillage d'au moins 45 dynes/cm (soit 45 x $10^{-3}$ newton/m).

4. Film de matière plastique à utiliser selon les revendications 1 à 3, caractérisé en ce que la composition de la matière du film est choisie telle qu'elle permette d'obtenir une tension superficielle ou une tension de mouillage d'au moins 45 dynes/cm (soit 45 x $10^{-3}$ newton/m) après un traitement préalable par effet corona.

5. Film de matière plastique à utiliser selon la revendication 4, caractérisé en ce que la proportion de lubrifiant dans la matière plastique du film est réduite au minimum.

6. Film de matière plastique à utiliser selon les revendications 4 et 5, caractérisé en ce qu'on ajoute de la craie à la matière plastique du film.

7. Film de matière plastique à utiliser selon les revendications 1 à 6, caractérisé en ce que le film de matière plastique est en polyéthylène.

8. Film de matière plastique à utiliser selon les revendications 1 à 7, caractérisé en ce que la matière plastique du film contient une combinaison de divers polyéthylènes et d'additifs, et se compose, en proportions adaptées, de :
   1. au moins 45% en poids de polyéthylène linéaire (LLDPE)

2. de 10 à 15% en poids de polyéthylène haute pression (LDPE)

3. de 0,5 à 10% en poids de polyéthylène basse pression (HDPE)

4. de 0,1 à 5% en poids d'oléamide ou d'érucamide et de silice naturelle, et

5. jusqu'à environ 5% en poids d'esters d'acides gras, de colorants, d'acide silicique synthétique, de stabilisants et d'un moyen auxiliaire pour le traitement,

le total des constituants 1 à 5 étant toujours de 100% en poids.

9. Film de matière plastique à utiliser selon les revendications 1 à 8, caractérisé en ce qu'on façonne avec le film plastique des pièces préformées, par exemple pour recouvrir le coffre à bagages ou le capot du moteur dans le cas de véhicules à moteur.

10. Film de matière plastique à utiliser selon les revendications 1 à 9, caractérisé en ce que l'intensité est choisie d'une force telle qu'il soit tenu compte d'une décroissance des propriétés de surface du film de matière plastique traité.

11. Film de matière plastique à utiliser selon la revendication 10, caractérisé en ce que l'intensité du traitement préalable est choisie d'une force telle qu'il soit tenu compte d'une décroissance des propriétés de surface du film de matière plastique traité, et qu'après une période d'environ 6 mois après le traitement la surface du film présente une tension superficielle ou une tension de mouillage d'au moins 45 dynes/cm (soit $45 \times 10^{-3}$ newton/m).

12. Film de matière plastique à utiliser selon les revendications 1 à 11, caractérisé en ce qu'il est constitué d'un matériau composite.

13. Film de matière plastique à utiliser selon les revendications 1 à 12, caractérisé en ce qu'il a été soumis au traitement préalable sur ses deux faces.

14. Procédé de fabrication d'un film de matière plastique à utiliser selon les revendications 1 à 13, caractérisé en ce que ce film parcourt, à la fin de sa fabrication, un dispositif de traitement par effet corona, au moins une de ses faces étant soumise à ce traitement préalable.

15. Procédé selon la revendication 14, caractérisé en ce que l'intensité du traitement préalable lors de la fabrication est choisie de force telle qu'on obtienne à la surface du film une tension superficielle et/ou une tension de mouillage d'au moins 45 dynes/cm (soit $45 \times 10^{-3}$ newton/m).

16. Procédé selon les revendications 14 et 15, caractérisé en ce que la puissance électrique par unité de surface ($W/cm^2$) lors du traitement préalable par effet corona ainsi que la vitesse de défilement du film au cours du traitement sont choisies d'une valeur telle qu'on obtienne une tension superficielle et/ou une tension de mouillage d'au moins 45 dynes/cm (soit $45 \times 10^{-3}$ newton/m).

Fig. 1